# EUROPEAN PATENT SPECIFICATION

(11) **EP 3 805 173 B1**
(45) Date of publication and mention of the grant of the patent: **01.06.2022**
(21) Application number: 19811316.9
(22) Date of filing: 15.04.2019
(51) Int. Cl.: C03C 27/06, E06B 3/667, E06B 3/677, E06B 3/66, E06B 3/663

(54) **GLASS PANEL UNIT MANUFACTURING METHOD**
GLASSCHEIBENEINHEITHERSTELLUNGSVERFAHREN
PROCÉDÉ DE FABRICATION D'UNE UNITÉ PANNEAU EN VERRE

(30) Priority: 31.05.2018 JP 2018105524
(43) Date of publication of application: 14.04.2021
(73) Proprietor: Panasonic Intellectual Property Management Co., Ltd., Osaka-shi, Osaka 540-6207 (JP)
(72) Inventor: SHIMIZU, Takeshi, Osaka-shi, Osaka 540-6207 (JP); ABE, Hiroyuki, Osaka-shi, Osaka 540-6207 (JP); NONAKA, Masataka, Osaka-shi, Osaka 540-6207 (JP); HASEGAWA, Kazuya, Osaka-shi, Osaka 540-6207 (JP); URIU, Eiichi, Osaka-shi, Osaka 540-6207 (JP); ISHIBASHI, Tasuku, Osaka-shi, Osaka 540-6207 (JP); ISHIKAWA, Haruhiko, Osaka-shi, Osaka 540-6207 (JP)
(74) Representative: Müller-Boré & Partner Patentanwälte PartG mbB
(86) International application number: PCT/JP2019/016136
(87) International publication number: WO 2019/230218

(56) References cited:
- WO-A1-2016/084384
- JP-A- 2015 515 437
- JP-A- 2015 515 437
- JP-A- 2017 001 949
- JP-A- 2018 052 758
- JP-A- 2018 052 758
- US-A1- 2006 042 748
- US-A1- 2018 066 470

## Description

### Technical Field

The present invention generally relates to a method for manufacturing a glass panel unit, and more particularly relates to a method for manufacturing a glass panel unit using a first panel with warpage and a second panel.

### Background Art

Patent Literature 1 discloses a multi-pane glazing unit. The multi-pane glazing unit of Patent Literature 1 includes a first panel, a second panel arranged to face the first panel, and a sealant for hermetically bonding the first panel and the second panel together. The multi-pane glazing unit further includes a plurality of spacers placed in an internal space, hermetically sealed by the first panel, the second panel, and the sealant to create an evacuated space, so as to contact with the first panel and the second panel.

In the manufacturing process of the known multi-pane glazing unit, if either first panel or the second panel has warpage, then it is difficult for the sealant to contact with both of the first panel and the second panel before the first panel and the second panel are hermetically bonded together with the sealant. That is why in order to bring the sealant into contact with the first panel and the second panel compulsorily such that no gap is left between the first panel, the second panel, and the sealant while hermetically bonding the first panel and the second panel together with the sealant, a clip needs to be put on so as to tightly hold the first panel and the second panel together.

JP 2018 052758 A describes a glass panel unit comprising a first panel, a second panel disposed to face the first panel with a predetermined distance between them, an encapsulating material disposed between the first panel and the second panel and for air tightly bonding the first panel with the second panel, an internal space providing a depressurized space by tightly closing with the first panel, the second panel, and the encapsulating material, and a spacer disposed in the internal space to contact the first panel and the second panel.

### Citation List

### Patent Literature

Patent Literature 1: JP H11-311069 A

### Summary of Invention

An object of the present invention is to provide a method for manufacturing a glass panel unit without using the clip to tightly hold the first panel and second panel together such that no gap is left between the first panel, the second panel, and a hot glue. This object is solved by the glass panel unit manufacturing method having the features of independent claim 1. Specific embodiments are defined in the dependent claims.

A glass panel unit manufacturing method according to an aspect of the present invention includes a glue arrangement step, a pillar forming step, an assembly forming step, a bonding step, an evacuation step, and a sealing step.

The glue arrangement step includes arranging a hot glue on either a first panel or a second panel. The first panel includes a first glass pane and has a predetermined degree of warpage. The second panel includes a second glass pane.

The pillar forming step includes placing pillars on either the first panel or the second panel.

The assembly forming step includes forming an assembly by arranging the second panel such that the second panel faces the first panel. The assembly includes the first panel, the second panel, the hot glue, and the pillars and has an exhaust port provided through at least one of the first panel, the second panel, or the hot glue.

The bonding step includes bonding the first panel and the second panel together with the hot glue and thereby forming an internal space surrounded, except the exhaust port, with the first panel, the second panel, and the hot glue that has melted by heating the assembly with the first panel arranged to form an upper part of the assembly and the second panel arranged to form a lower part of the assembly.

The evacuation step includes reducing pressure in the internal space by evacuation that involves exhausting a gas from the internal space.

The sealing step includes creating a hermetically sealed evacuated space by closing the exhaust port and sealing the internal space while maintaining a reduced pressure in the internal space.

### Brief Description of Drawings

FIG. 1 is a schematic cross-sectional view of a glass panel unit according to a first embodiment according to the invention;
   FIG. 2 is a partially cutaway, schematic plan view of the glass panel unit;
   FIG. 3 is a schematic cross-sectional view of an assembly of the glass panel unit;
   FIG. 4 is a partially cutaway, schematic plan view of the assembly;
   FIG. 5 is a cross-sectional view illustrating how the first panel of the glass panel unit is warped;
   FIG. 6 illustrates a method for manufacturing the glass panel unit;
   FIG. 7 illustrates the method for manufacturing the glass panel unit;
   FIG. 8 illustrates the method for manufacturing the glass panel unit;
   FIG. 9 illustrates the method for manufacturing the glass panel unit;
   FIG. 10 illustrates the method for manufacturing the glass panel unit;
   FIG. 11 illustrates a method for manufacturing a glass panel unit according to a second embodiment not forming part of the invention but representing an example for better understanding the invention; and
   FIG. 12 illustrates a method for manufacturing a glass panel unit according to a third embodiment according to the invention.

### Description of Embodiments

The first to third embodiments to be described below generally relate to a method for manufacturing a glass panel unit, and more particularly relate to a method for manufacturing a glass panel unit using a first panel with warpage and a second panel.

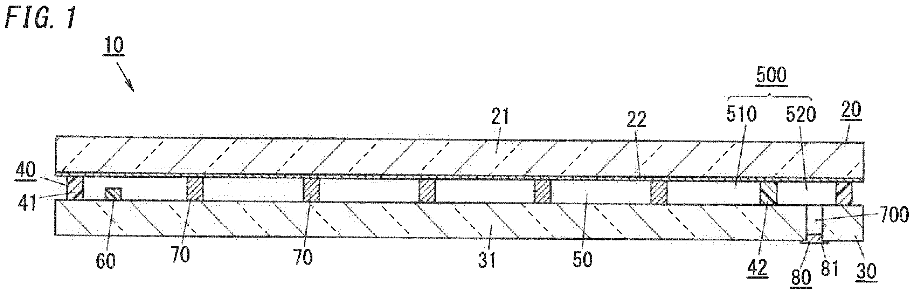

A method for manufacturing a glass panel unit according to a first embodiment will be described with reference to FIGS. 1-10.

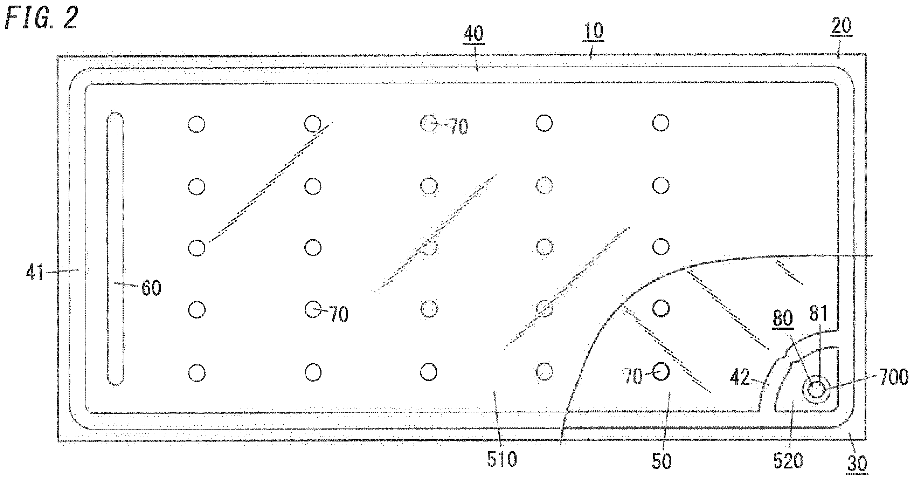

FIGS. 1 and 2 illustrate a glass panel unit (which is a glass panel unit as a final product) 10 according to the first embodiment. The glass panel unit 10 according to the first embodiment is a thermal insulation glazing unit. The thermal insulation glazing unit is a type of a multi-pane glazing unit (multi-pane glass panel unit) including a pair of glass panels and having an evacuated space (which may be a vacuum space) between the pair of glass panels.

The glass panel unit 10 according to the first embodiment includes a first panel 20, a second panel 30, a seal 40, an evacuated space 50, a gas adsorbent 60, a plurality of pillars 70, and a closing member 80.

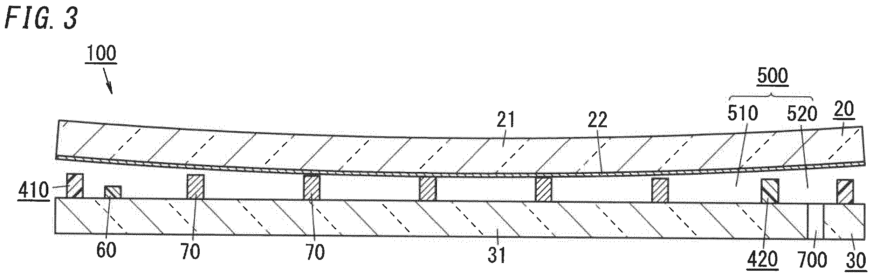

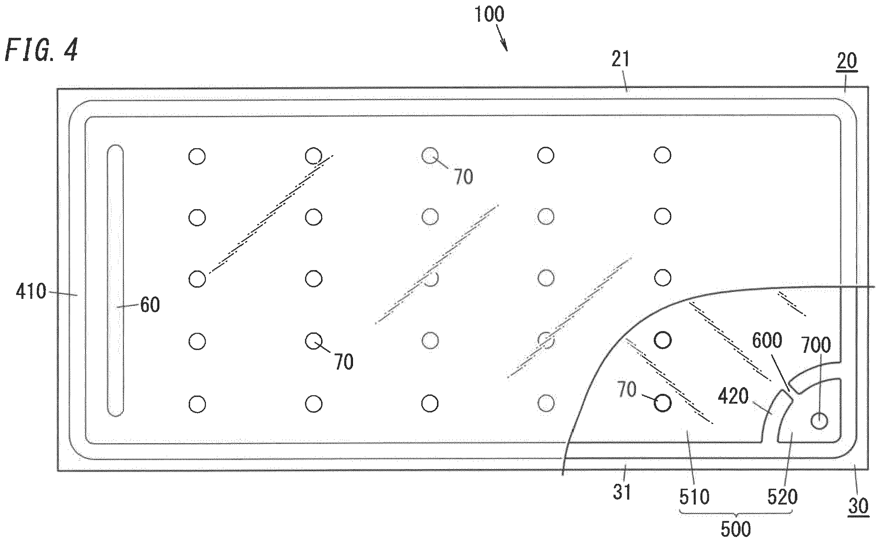

The glass panel unit 10 is obtained by processing an assembly 100 as an intermediate product shown in FIGS. 3 and 4.

The assembly 100 includes at least the first panel 20, the second panel 30, a hot glue (including a frame member 410 and a partition 420 to be described later), and the pillars 70, and has an exhaust port 700. Specifically, according to the first embodiment, the assembly 100 includes the first panel 20, the second panel 30, the frame member 410 and partition 420 serving as a hot glue, an internal space 500, an air passage 600, the exhaust port 700, a gas adsorbent 60, and the plurality of pillars 70.

The first panel 20 includes a first glass pane 21 defining the planar shape of the first panel 20 and a coating 22.

The first glass pane 21 is a rectangular flat plate and has a first surface (the lower surface in FIG. 3) and a second surface (the upper surface shown in FIG. 3) on both sides in the thickness direction. The first and second surfaces are parallel to each other. The first glass pane 21with the rectangular shape may have a length of 1360 mm to 2350 mm each side, and a thickness of about 1 mm to about 20 mm. However, these numerical values are only examples and should not be construed as limiting. Examples of materials for the first glass pane 21 include soda lime glass, high strain point glass, chemically tempered glass, alkali-free glass, quartz glass, Neoceram, and thermally tempered glass.

The coating 22 is formed on the first surface of the first glass pane 21. In the first embodiment, a so-called "Low-E (low-emissivity)" film is formed as the coating 22 on the first surface of the first glass pane 21. The coating 22 does not have to be a Low-E film but may also be any other film with desired physical properties. Optionally, the first panel 20 may consist of the first glass pane 21. In other words, the first panel 20 includes at least the first glass pane 21.

In the first embodiment, the Low-E film is formed by sputtering as the coating 22 on the first surface of the first glass pane 21. In forming the Low-E film by sputtering, the first glass pane 21 is heated to a high temperature (of 250°C, for example) in order to increase the adhesion of the Low-E film to the first glass pane 21.

Thereafter, the first panel 20, in which the first surface of the first glass pane 21 is covered with the Low-E film as the coating 22, is cooled to ordinary temperature. When cooled to the ordinary temperature, the first panel 20 will have warpage due to a difference in coefficient of thermal expansion between the first glass pane 21 and the coating 22. In this case, the first panel 20 will be warped such that the first surface of the first glass pane 21 (i.e., the surface covered with the coating 22) is raised.

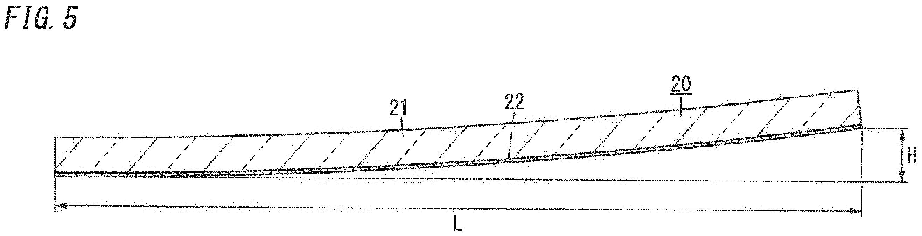

The warpage according to the first embodiment may be represented by an H/L ratio of about 0.2%, where L is the length as measured along the surface of the first panel 20 and H is the magnitude of deviation as measured perpendicularly to the surface of the first panel 20 as shown in FIG. 5. For example, if the first panel 20 has a length L of 1500 mm, then the magnitude of the warpage (i.e., the magnitude of deviation H perpendicular to the surface of the first panel 20) is about 3 mm.

As shown in FIGS. 3 and 4, the second panel 30 includes a second glass pane 31 defining the planar shape of the second panel 30. The second glass pane 31 is a rectangular flat plate and has a first surface (the upper surface in FIG. 3) and a second surface (the lower surface shown in FIG. 3) on both sides in the thickness direction. The first and second surfaces of the second glass pane 31 are parallel to each other and are flat surfaces. Note that the second panel 30 may also have some permissible degree of warpage. The warpage of the second panel 30 is permissible as long as when the second panel 30 has a length L of 1500 mm, for example, the magnitude of deviation H perpendicular to the surface of the second panel 30 is less than 0.3 mm.

The second glass pane 31 may have the same planar shape and same planar dimensions as the first glass pane 21. That is to say, the second panel 30 may have the same planar shape as the first panel 20. Also, the second glass pane 31 may be as thick as the first glass pane 21. Examples of materials for the second glass pane 31 include soda lime glass, high strain point glass, chemically tempered glass, alkali-free glass, quartz glass, Neoceram, and thermally tempered glass.

The second panel 30 may consist of the second glass pane 31. That is to say, the second glass pane 31 may be the second panel 30 itself. Optionally, the second panel 30 may have a coating on either surface thereof. The coating is a film with desired physical properties (such as an infrared reflective film). In that case, the second panel 30 is made up of the second glass pane 31 and the coating. In short, the second panel 30 includes at least the second glass pane 31.

The second panel 30 is arranged to face the first panel 20. Specifically, the first panel 20 and the second panel 30 are arranged such that the first surface of the first glass pane 21 and the first surface of the second glass pane 31 are parallel to each other and face each other.

The frame member 410 is arranged between the first panel 20 and the second panel 30 to hermetically bond the first panel 20 and the second panel 30 together. Thus, an internal space 500 is formed which is surrounded with the frame member 410, the first panel 20, and the second panel 30.

The frame member 410 is made of a hot glue (which is a first hot glue with a first softening point). The first hot glue may be a glass frit, for example. The glass frit may be a low-melting glass frit, for example. Examples of the low-melting glass frits include a bismuth-based glass frit, a lead-based glass frit, and a vanadium-based glass frit.

The frame member 410 has a rectangular frame shape. The planar shape of the frame member 410 may be substantially the same as that of the first glass pane 21 and the second glass pane 31. However, the frame member 410 has smaller planar dimensions than the first glass pane 21 and the second glass pane 31. The frame member 410 is formed along the outer periphery of the upper surface of the second panel 30 (i.e., the first surface of the second glass pane 31). That is to say, the frame member 410 is formed to surround an almost entire region on the second panel 30 (i.e., the first surface of the second glass pane 31 almost entirely).

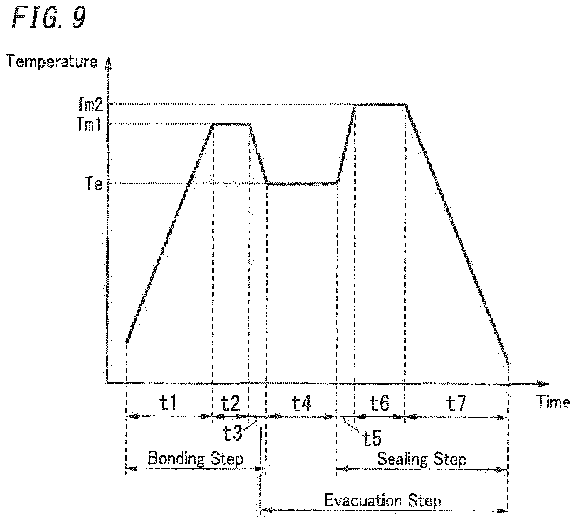

The first panel 20 and the second panel 30 are hermetically bonded together with the frame member 410 by once melting the first hot glue of the frame member 410 at a predetermined temperature (first melting temperature) Tm1 (see FIG. 9) which is equal to or higher than the first softening point.

The partition 420 is arranged in the internal space 500. The partition 420 partitions the internal space 500 into a hermetically sealed space, i.e., a first space 510 which will be hermetically sealed to form an evacuated space 50 when the glass panel unit 10 is completed, and a gas exhausting space, i.e., a second space 520 communicating with the exhaust port 700. The partition 420 is provided closer to a first end (i.e., the right end in FIG. 4) along the length of the second panel 30 (i.e., the rightward/leftward direction in FIG. 4) than to a middle of the length of the second panel 30 such that the first space 510 becomes larger than the second space 520.

The partition 420 is made of a hot glue (i.e., a second hot glue having a second softening point). The second hot glue may be a glass frit, for example. The glass frit may be a low-melting glass frit, for example. Examples of the low-melting glass frits include a bismuth-based glass frit, a lead-based glass frit, and a vanadium-based glass frit. The second hot glue is the same as the first hot glue. The second softening point is equal to the first softening point.

An air passage 600 that allows the first space 510 to communicate with the second space 520 is provided through the partition 420.

The exhaust port 700 is a hole that connects the second space 520 to an external environment. The exhaust port 700 is used to exhaust a gas from the first space 510 through the second space 520 and the air passage 600. The exhaust port 700 is provided through the second panel 30 to connect the second space 520 to the external environment. Specifically, the exhaust port 700 is provided at a corner of the second panel 30. In the first embodiment, the exhaust port 700 is provided for the second panel 30. However, this is only an example and should not be construed as limiting. The exhaust port 700 may be provided for the first panel 20, or the second panel 30, or a part of the hot glue forming the frame member 410.

The gas adsorbent 60 is arranged in the first space 510. Specifically, the gas adsorbent 60 has an elongate shape and is arranged at a second end along the length of the second panel 30 (i.e., the left end in FIG. 4) to extend along the width of the second panel 30. That is to say, the gas adsorbent 60 is arranged at an end of the first space 510 (evacuated space 50), thus making the gas adsorbent 60 less conspicuous. In addition, the gas adsorbent 60 is provided at some distance from the partition 420 and the air passage 600. This reduces, when a gas is being exhausted from the first space 510, the chances of the gas adsorbent 60 interfering with the gas exhaustion.

The gas adsorbent 60 is used to adsorb an unnecessary gas (such as a residual gas). The unnecessary gas is a gas emitted from the frame member 410 and the partition 420 when the frame member 410 and the partition 420 are heated, for example.

The gas adsorbent 60 includes a getter. The getter is a material having the property of adsorbing molecules smaller in size than a predetermined one. The getter may be an evaporative getter, for example. The evaporative getter has the property of releasing adsorbed molecules when heated to a predetermined temperature (activation temperature) or more. This allows, even if the adsorption ability of the evaporative getter deteriorates, the evaporative getter to recover its adsorption ability by being heated to the activation temperature or more. The evaporative getter may be a zeolite or an ion-exchanged zeolite (such as a copper ion exchanged zeolite).

The gas adsorbent 60 includes a powder of this getter. Specifically, the gas adsorbent 60 may be formed by applying a liquid including a powder of the getter. This reduces the size of the gas adsorbent 60, thus allowing the gas adsorbent 60 to be arranged even when the evacuated space 50 is narrow.

The plurality of pillars 70 is used to maintain a predetermined gap between the first panel 20 and the second panel 30. That is to say, the plurality of pillars 70 serves spacers to maintain the gap distance between the first panel 20 and the second panel 30 at a desired value.

The plurality of pillars 70 are placed in the first space 510. Specifically, the plurality of pillars 70 are arranged at the intersections of a rectangular (either square or rectangular) grid. The interval between the plurality of pillars 70 may be at least 2 cm, for example. Note that the dimensions, number, interval, and arrangement pattern of the pillars 70 may be selected appropriately.

The pillars 70 may be made of a transparent material. However, this is only an example and should not be construed as limiting. Alternatively, the pillars 70 may also be made of an opaque material if the dimensions of the pillars 70 are sufficiently small. The material for the pillars 70 is selected to prevent the pillars 70 from being deformed in any of the bonding step, the evacuation step, or the sealing step. For example, the material for the pillars 70 is selected to have a softening point (softening temperature) higher than the first softening point of the first hot glue and the second softening point of the second hot glue.

The closing member 80 is used to reduce the chances of dust, dirt or any other foreign particles entering the second space 520 through the exhaust port 700. In the first embodiment, the closing member 80 may be a lid 81 provided on the surface of the exhaust port 700 of the first panel 20 or the second panel 30.

Providing such a closing member 80 for the exhaust port 700 reduces the chances of dust, dirt or any other foreign particles entering the second space 520 through the exhaust port 700. This reduces the chances of the dust, dirt or any other foreign particles that have entered either the exhaust port 700 or the second space 520 adversely affecting the appearance of the glass panel unit 10. Optionally, such a closing member 80 may be omitted.

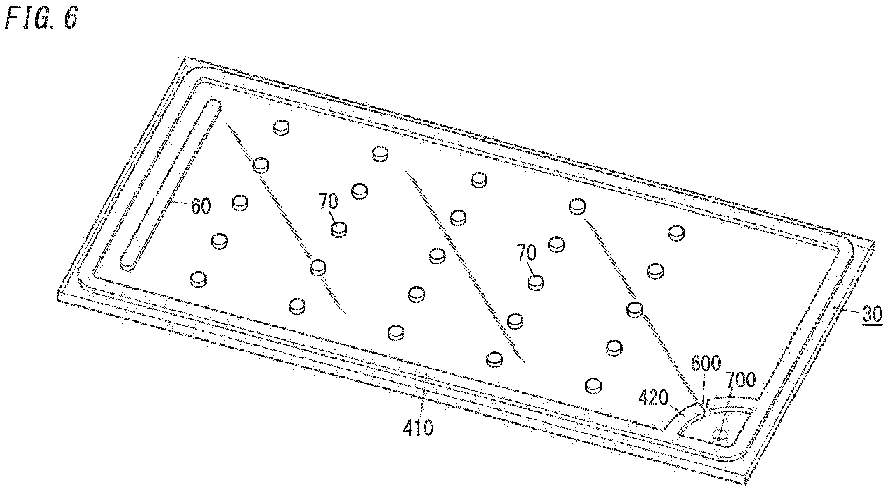

Next, a method for manufacturing the glass panel unit 10 according to the first embodiment will be described with reference to FIGS. 6-10. The glass panel unit manufacturing method according to the first embodiment includes a glue arrangement step, a pillar forming step, an assembly forming step, a bonding step, an evacuation step, and a sealing step. Optionally, the manufacturing method may further include other additional process steps as needed. These manufacturing process steps will be described one by one.

According to the first embodiment, first, a substrate forming step is performed, although not shown in any of the drawings. The substrate forming step is the process step of forming the first panel 20 and the second panel 30. Specifically, the substrate forming step may include, for example, making the first panel 20 and the second panel 30. Optionally, the substrate forming step may include cleaning the first panel 20 and the second panel 30 as needed.

Next, the step of providing the exhaust port 700 is performed. In this process step, the exhaust port 700 is provided through the second panel 30. Alternatively, the exhaust port 700 may be provided through the first panel 20 or may be provided through a hot glue to be arranged in the glue arrangement step to be described later. That is to say, the exhaust port 700 is provided through at least one of the first panel 20, the second panel 30, or the hot glue.

Next, as shown in FIG. 6, the glue arrangement step is performed. The glue arrangement step is the step of arranging a hot glue on either the first panel 20 or the second panel 30. Specifically, the glue arrangement step includes forming a frame member 410 and a partition 420 on the second panel 30. The glue arrangement step includes applying, with a dispenser, for example, a material for the frame member 410 (i.e., a first hot glue) and a material for the partition 420 (i.e., a second hot glue) onto the second panel 30 (i.e., the first surface of the second glass pane 31). As described above, the first hot glue and the second hot glue are the same material.

Optionally, the glue arrangement step may include drying and pre-baking the material for the frame member 410 and the material for the partition 420. For example, the second panel 30 on which the material for the frame member 410 and the material for the partition 420 are applied may be heated. If necessary, the first panel 20 may also be heated along with the second panel 30. That is to say, the first panel 20 and the second panel 30 may be heated under the same condition. Such prebaking may be omitted.

Next, the pillar forming step is performed. The pillar forming step is the step of placing pillars 70 on either the first panel 20 or the second panel 30. Specifically, the pillar forming step includes forming a plurality of pillars 70 in advance and placing, using a chip mounter, for example, the plurality of pillars 70 at predetermined positions on the second panel 30. The plurality of pillars 70 may be formed by photolithographic and etching techniques. In that case, the plurality of pillars 70 may be made of a photocurable material, for example. Alternatively, the plurality of pillars 70 may also be formed by a known thin film forming technique. When measured from the upper surface of the second panel 30, the height of the pillars 70 mounted on the second panel 30 is equal to the height of the hot glue mounted on the second panel 30.

Next, the gas adsorbent forming step is performed. Specifically, the gas adsorbent forming step includes forming a gas adsorbent 60 by applying a solution in which a powder of a getter is dispersed onto a predetermined region on the second panel 30 and drying the solution. Note that the glue arrangement step, the pillar forming step, and the gas adsorbent forming step may be performed in any arbitrary order. According to the first embodiment, in the glue arrangement step, the pillar forming step, and the gas adsorbent forming step, the hot glue, the pillars 70, and the gas adsorbent 60 are arranged on the second panel 30 with no warpage. This facilitates arrangement of the hot glue, the pillars 70, and the gas adsorbent 60 on the second panel 30 and improves the positioning accuracy.

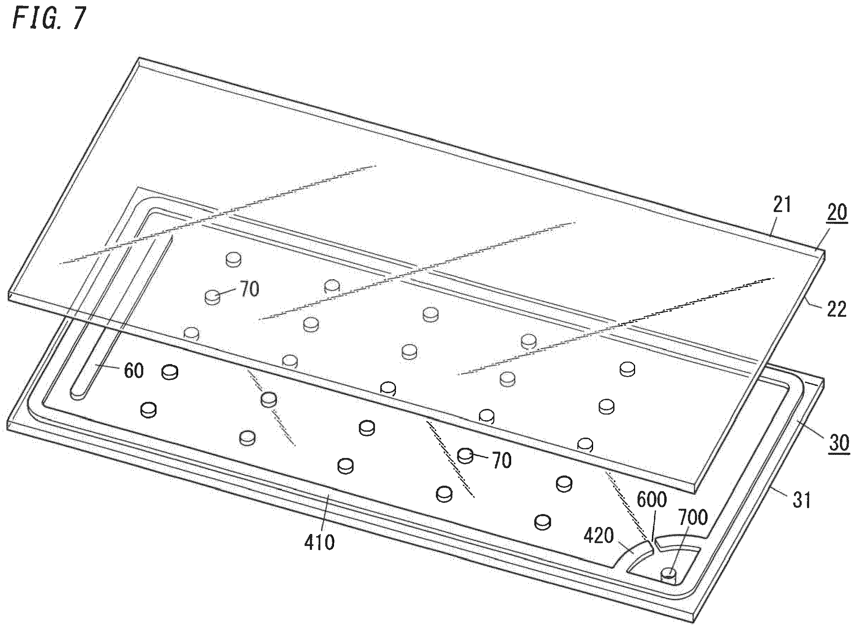

Next, the assembly forming step is performed. As shown in FIG. 7, the assembly forming step includes forming an assembly 100 (see FIGS. 3 and 4) by arranging the second panel 30 such that the second panel 30 faces the first panel 20.

The first panel 20 and the second panel 30 are arranged such that the first surface of the first glass pane 21 and the first surface of the second glass pane 31 are parallel to each other and face each other and laid one on top of the other. The assembly forming step includes arranging the first panel 20 and the second panel 30 such that a raised surface (first surface) of the first glass pane 21 faces the second panel 30. Performing this assembly forming step brings the hot glue into contact with the first panel 20 and the second panel 30, thus forming the assembly 100 shown in FIGS. 3 and 4.

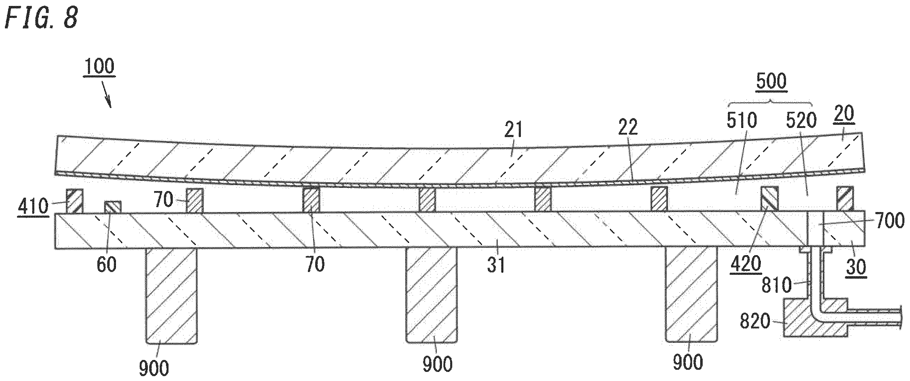

The first panel 20 of the assembly 100 has concave-up warpage. Thus, a middle portion along the length (corresponding to the rightward/leftward direction in FIG. 8) of the first surface (i.e., the lower surface in FIG. 8) of the first panel 20 easily comes into contact with the pillars 70 but end portions along the length of the first surface do not come into contact with the hot glue easily. Those end portions, which are out of contact with the pillars 70 or the hot glue, of the first panel 20, are either barely in contact with the hot glue or located over the hot glue to leave a gap with respect to the hot glue.

Next, the assembly mounting step is performed. The assembly mounting step includes mounting the assembly 100 on a supporting stage 900 of a melting furnace (not shown) with the first panel 20 forming an upper part of the assembly 100 and the second panel 30 forming a lower part of the assembly 100 as shown in FIG. 8. In this case, only one supporting stage 900 may be arranged in the melting furnace or a plurality of supporting stages 900 may be arranged as a set in the melting furnace. In the latter case, the respective upper surfaces of the supporting stages 900 are level with each other. The upper surface of the supporting stage(s) 900 is suitably a horizontal plane.

The assembly 100 is mounted such that the second surface (i.e., the lower surface in FIG. 8) of the second panel 30 is put on the upper surface of the supporting stages 900. The first panel 20 has concave-up warpage. The end portions, which are out of contact with the pillars 70 or the hot glue, of the first panel 20 are not supported by any member provided under them, and therefore, force that causes those portions to bend downward is produced by their own weight. At a temperature (ordinary temperature) before heating, however, the first panel 20 is still so hard and rigid that the first panel 20 hardly bends.

In addition, a vacuum pump is connected to the assembly 100 via an exhaust pipe 810 and a sealing head 820. The exhaust pipe 810 is bonded to the second panel 30 such that the inside of the exhaust pipe 810 communicates with the exhaust port 700, for example. Then, the sealing head 820 is attached to the exhaust pipe 810. In this manner, a suction port of the vacuum pump is connected to the exhaust port 700.

Next, the bonding step (first melting step) is performed. The bonding step includes heating the assembly 100 and melting the hot glue to bond the first panel 20 and the second panel 30 together with the hot glue and thereby form an internal space 500. The internal space 500 is a space surrounded with the first panel 20, the second panel 30, and the hot glue melted, except the exhaust port 700. The bonding step is performed with the first panel 20 forming an upper part of the assembly 100 and the second panel 30 forming a lower part of the assembly 100.

The bonding step and the evacuation step and sealing step following the bonding step are performed with the assembly 100 still loaded in the melting furnace.

The bonding step includes hermetically bonding the first panel 20 and the second panel 30 together by once melting the first hot glue at a predetermined temperature (first melting temperature) Tm1 equal to or higher than a first softening point. The bonding step is divided into a first temperature raising step, a first temperature maintaining step, and a first temperature lowering step according to temperature variations.

The first temperature raising step is the process step performed for the time period t1 shown in FIG. 9 and including raising the temperature in the melting furnace from the ordinary temperature to the first melting temperature Tm1.

The temperature maintaining step is the process step performed for the time period t2 shown in FIG. 9 and including maintaining the temperature in the melting furnace at the first melting temperature Tm1.

The first temperature lowering step is the process step performed for the time period t3 shown in FIG. 9 and including lowering the temperature in the melting furnace from the first melting temperature Tm1 to a predetermined temperature (exhaustion temperature) Te to be described later.

The first panel 20 and the second panel 30 are loaded into the melting furnace and are heated at the first melting temperature Tm1 for a predetermined amount of time (first melting time) t2 in the first temperature maintaining step as shown in FIG. 9.

The first melting temperature Tm1 and the first melting time t2 are defined such that the first panel 20 and the second panel 30 are hermetically bonded together with the hot glue of the frame member 410 but that the air passages 600 is not closed with the partition 420. That is to say, the lower limit of the first melting temperature Tm1 is the first softening point, but the upper limit of the first melting temperature Tm1 is set to prevent the air passages 600 from being closed by the partition 420. For example, if the first softening point and the second softening point are 434°C, the first melting temperature Tm1 is set at 440°C. Also, the first melting time t2 may be 10 minutes, for example. Note that in the bonding step, a gas is emitted from the frame member 410 but is adsorbed into the gas adsorbent 60.

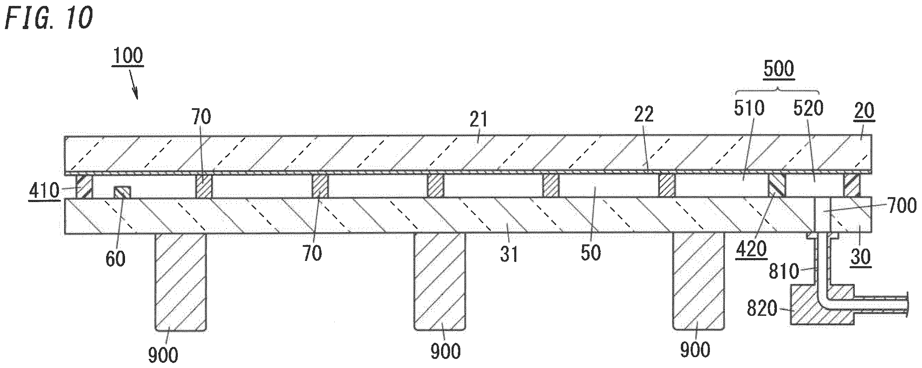

In addition, in the temperature maintaining step, the first panel 20 and the second panel 30 also soften to a certain degree. At this time, in the first panel 20 with the concave-up warpage, its end portions, which are located over the hot glue on the second panel 30, lower themselves due to their own weight with its middle portion in contact with the pillars 70 serving as a fulcrum. These end portions lower themselves to the point of coming into contact with the hot glue on the second panel 30. That is to say, when coming into contact with the hot glue, the end portions stop lowering themselves. This allows the first panel 20 to be supported by all or almost all of the hot glue and the pillars 70 and to have its warpage reduced significantly or even eliminated as shown in FIG. 10.

In the first temperature lowering step to be performed after the first temperature maintaining step, the first hot glue that has been once melted is going to cure, so are the first panel 20 and the second panel 30.

Next, the evacuation step is performed. The evacuation step includes reducing pressure in the internal space 500 by evacuation that involves exhausting a gas from the internal space 500 through the exhaust port 700.

The evacuation is carried out with a vacuum pump. The vacuum pump exhausts a gas from the internal space 500 via the sealing head 820, the exhaust pipe 810, and the exhaust port 700. Alternatively, the evacuation may also be carried out by exhausting a gas from the entire melting furnace, not via the exhaust pipe 810 and the sealing head 820.

The evacuation step is divided into a first temperature lowering step, a second temperature maintaining step, a second temperature raising step, a third temperature maintaining step, and a second temperature lowering step according to temperature variations.

The first temperature lowering step of the evacuation step partially overlaps with the first temperature lowering step of the bonding step preceding the evacuation step. That is to say, in the middle of the first temperature lowering step of the bonding step, the evacuation step is started. In particular, the evacuation step is suitably started when the temperature of the assembly 100 is equal to or higher than the softening point of the hot glue. Alternatively, the evacuation step may begin with the next second temperature maintaining step, not the first temperature lowering step.

The second temperature maintaining step is the process step performed for the time period t4 shown in FIG. 9 and including maintaining the temperature in the melting furnace at a exhaustion temperature Te. The second temperature maintaining step includes exhausting a gas from the first space 510 via the air passage 600, the second space 520, and the exhaust port 700.

The exhaustion temperature Te is set at a temperature higher than the getter activation temperature (of 350°C, for example) of the gas adsorbent 60 but lower than the first softening point and the second softening point (of 434°C). For example, the exhaustion temperature Te maybe 390°C.

This prevents the frame member 410 and the partition 420 from being deformed. In addition, this activates the getter of the gas adsorbent 60, thus causing the molecules (gas) adsorbed into the getter to be released from the getter. Then, the molecules (i.e., the gas) released from the getter are exhausted via the first space 510, the air passage 600, the second space 520, and the exhaust port 700. Thus, the evacuation step allows the gas adsorbent 60 to recover its adsorption ability.

The exhaustion time t4 is set to create an evacuated space 50 with a desired degree of vacuum (e.g., a degree of vacuum of 0.1 Pa or less). The exhaustion time t4 may be set at 120 minutes, for example. Note that the degree of vacuum of the evacuated space 50 is not particularly limited.

The second temperature raising step, the third temperature maintaining step, and the second temperature lowering step following the second temperature maintaining step overlap with the sealing step following the second temperature maintaining step. That is to say, in the second temperature raising step, the third temperature maintaining step, and the second temperature lowering step, the evacuation step and the sealing step are performed in parallel with each other.

Next, the sealing step (second melting step) is performed. The sealing step includes creating a hermetically sealed evacuated space 50 by closing the exhaust port 700 and sealing the internal space 500 while maintaining the reduced pressure in the internal space 500.

The second temperature raising step is the process step performed for the time period t5 shown in FIG. 9 and including raising the temperature in the melting furnace from the exhaustion temperature Te to a predetermined temperature (second melting temperature) Tm2.

The third temperature maintaining step is the process step performed for the time period t6 shown in FIG. 9 and including maintaining the temperature in the melting furnace at the second melting temperature Tm2.

The third temperature maintaining step includes melting the second hot glue once at a predetermined temperature Tm2 equal to or higher than the second softening point to deform the partition 420 and thereby form a boundary wall 42 closing the air passage 600. Specifically, the first panel 20 and the second panel 30 are heated at the second melting temperature Tm2 for a predetermined amount of time (second melting time) t6 in the melting furnace.

The partition 420 contains the second hot glue. Thus, melting the second hot glue once at the predetermined temperature (second melting temperature) Tm2 that is equal to or higher than the second softening point allows the partition 420 to be deformed into the boundary wall 42 shown in FIGS. 1 and 2. Note that the first melting temperature Tm1 is set at a temperature lower than the second melting temperature Tm2. This prevents, when the first panel 20 and the second panel 30 are bonded together with the frame member 410, the partition 420 from being deformed and closing the air passage 600.

The second melting temperature Tm2 and the second melting time t6 are set such that the second hot glue softens to form the boundary wall 42 that closes the air passage 600. The lower limit of the second melting temperature Tm2 is the second softening point (of 434°C). Nevertheless, the sealing step is performed for the purpose of deforming the partition 420 unlike the bonding step. Thus, the second melting temperature Tm2 is set at a temperature higher than the first melting temperature (of 440°C) Tm1. The second melting temperature Tm2 may be set at 460°C, for example. Also, the second melting time t6 may be 30 minutes, for example.

The second temperature lowering step is the process step performed for the time period t7 shown in FIG. 9 and includes lowering the temperature in the melting furnace from the second melting temperature Tm2 to ordinary temperature.

After the second temperature lowering step has been performed, the glass panel unit 10 will be unloaded from the melting furnace.

The glass panel unit 10 thus obtained includes the first panel 20, the second panel 30, the seal 40, the evacuated space 50, the second space 520, the gas adsorbent 60, the plurality of pillars 70, and the closing member 80 as shown in FIG. 2.

The evacuated space 50 is formed by exhausting a gas from the first space 510 via the second space 520 and the exhaust port 700 as described above. In other words, the evacuated space 50 is the first space 510, of which the pressure (i.e., the degree of vacuum) is equal to or less than a predetermined value. The predetermined value may be 0.1 Pa, for example. The evacuated space 50 is hermetically closed completely by the first panel 20, the second panel 30, and the seal 40, and therefore, is separated from the second space 520 and the exhaust port 700.

The seal 40 not only surrounds the evacuated space 50 entirely but also hermetically bonds the first panel 20 and the second panel 30 together. The seal 40 has the shape of a frame including a first part 41 and a second part (boundary wall 42). The first part 41 is a portion, corresponding to the evacuated space 50, of the frame member 410. That is to say, the first part 41 is a portion, facing the evacuated space 50, of the frame member 410. The second part is the boundary wall 42 obtained by deforming the partition 420.

Furthermore, in the bonding step (in the first temperature maintaining step, in particular), the first panel 20 that has had the concave-up warpage softens to a certain degree to have its warpage either reduced significantly or eliminated. Thus, a glass panel unit 10 with sufficient flatness is obtained. In this case, heating is conducted with the first panel 20 with warpage forming the upper part of the assembly 100 and with the second panel 30 forming the lower part of the assembly 100. Thus, the first panel 20 becomes flat or generally flat due to its own weight. This eliminates the need to use any clip to tightly hold the first panel 20 and second panel 30 together such that no gap is left between the first panel 20, the second panel 30, and the hot glue (including the frame member 410 and the partition 420). This cuts down the manufacturing cost of the glass panel unit 10 and simplifies the manufacturing process thereof.

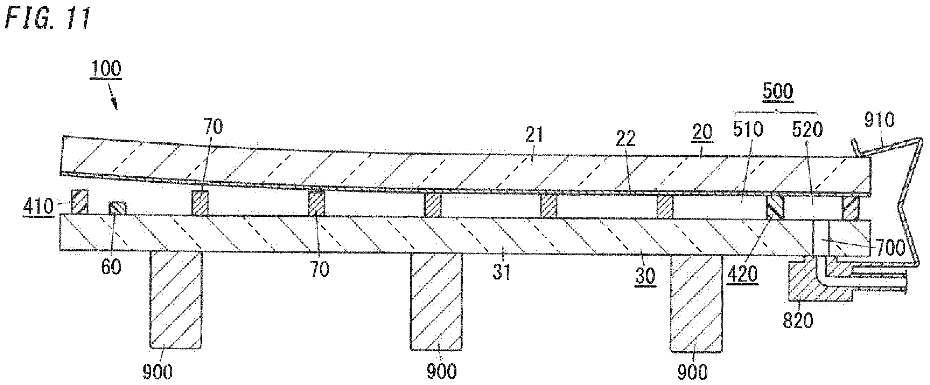

Next, a method for manufacturing a glass panel unit 10 according to a second embodiment not forming part of the invention but representing an example for better understanding the invention will be described with reference to FIG. 11. The method for manufacturing the glass panel unit 10 according to the second embodiment is mostly the same as the method for manufacturing the glass panel unit 10 according to the first embodiment. Thus, in the following description, their common features will not be described all over again to avoid redundancies.

In the first embodiment described above, no clip is used to tightly hold the first panel 20 and second panel 30 together such that no gap is left between the first panel 20, the second panel 30, and the hot glue (including the frame member 410 and the partition 420).

On the other hand, according to the second embodiment, a clip 910 for holding the first panel 20 and the second panel 30 together to bring the sealing head 820 into close contact with the second panel 30 forms an integral part of the sealing head 820. This clip 910 not only brings the sealing head 820 into close contact with the second panel 30 but also holds the first panel 20 and the second panel 30 together to reduce the chances of leaving a gap between the first panel 20, the second panel 30, and the hot glue.

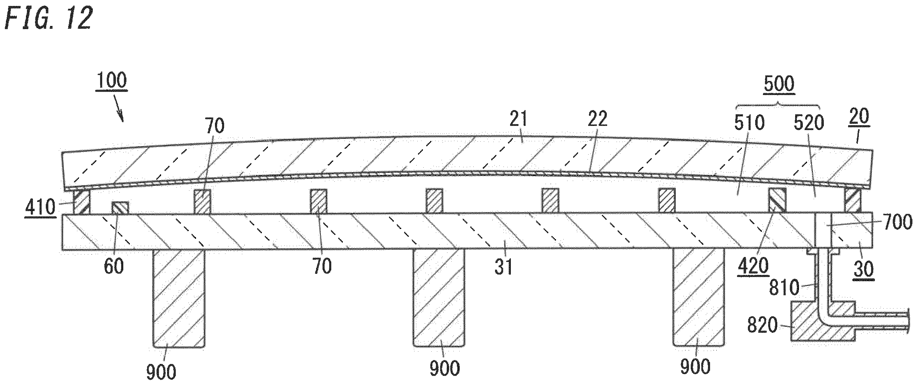

Next, a method for manufacturing a glass panel unit 10 according to a third embodiment will be described with reference to FIG. 12. The method for manufacturing the glass panel unit 10 according to the third embodiment is mostly the same as the method for manufacturing the glass panel unit 10 according to the first embodiment. Thus, in the following description, their common features will not be described all over again to avoid redundancies.

In the first embodiment described above, the first panel 20 of the assembly 100 is arranged such that the raised surface (i.e., the first surface) of the first glass pane 21 faces the second panel 30. On the other hand, according to the third embodiment, the first panel 20 of the assembly 100 is arranged such that a recessed surface (i.e., the first surface) of the first glass pane 21 faces the second panel 30. The first glass pane 21 is thermally tempered glass.

According to the third embodiment, as the first panel 20 softens in the first temperature maintaining step, a middle portion, which is located over the pillars 70 on the second panel 30, of the first panel 20 with concave-down warpage lowers itself due to its own weight with both end portions in contact with the hot glue serving as fulcrums. This middle portion lowers itself to the point of coming into contact with the pillars 70 on the second panel 30. That is to say, when coming into contact with the pillars 70, the middle portion stops lowering itself. This allows the first panel 20 to be supported by all, or almost all, of the hot glue and the pillars 70 and to have its warpage reduced significantly or even eliminated.

Next, variations of the first to third embodiments will be described.

In the embodiments described above, the glass panel unit 10 has a rectangular shape. However, this is only an example and should not be construed as limiting. Alternatively, the glass panel unit 10 may also have a circular, polygonal, or any other desired shape. That is to say, the first panel 20, the second panel 30, and the seal 40 do not have to be rectangular but may also have a circular, polygonal, or any other desired shape. In addition, the respective shapes of the first panel 20, the second panel 30, the frame member 410, and the boundary wall 42 do not have to be the ones used in the embodiment described above, but may also be any other shapes that allow a glass panel unit 10 of a desired shape to be obtained. Note that the shape and dimensions of the glass panel unit 10 may be determined according to the intended use of the glass panel unit 10.

Neither the first surface nor second surface of the first glass pane 21 of the first panel 20 has to be a plane. Likewise, neither the first surface nor second surface of the second glass pane 31 of the second panel 30 has to be a plane.

The first glass pane 21 of the first panel 20 and the second glass pane 31 of the second panel 30 do not have to have the same planar shape and planar dimensions. The first glass pane 21 and the second glass pane 31 do not have to have the same thickness, either. In addition, the first glass pane 21 and the second glass pane 31 do not have to be made of the same material, either.

The seal 40 does not have to have the same planar shape as the first panel 20 and the second panel 30. Likewise, the frame member 410 does not have to have the same planar shape as the first panel 20 and the second panel 30, either.

Optionally, the first panel 20 may include a coating having desired physical properties and formed on the second surface of the first glass pane 21. Alternatively, the first panel 20 may have no coatings 22. That is to say, the first panel 20 may consist of the first glass pane 21 alone.

Furthermore, the second panel 30 may include a coating with desired physical properties. The coating may include at least one of thin films respectively formed on the first and second surfaces of the second glass pane 31, for example. The coating may be an infrared reflective film or ultraviolet reflective film that reflects light with a particular wavelength, for example.

Furthermore, in the embodiments described above, the frame member 410 is made of the first hot glue. However, this is only an example and should not be construed as limiting. Alternatively, the frame member 410 may include not only the first hot glue but also a core material or any other material as well. That is to say, the frame member 410 needs to include at least the first hot glue. Furthermore, in the embodiments described above, the frame member 410 is formed to cover the second panel 30 almost entirely. However, this is only an example and should not be construed as limiting. Rather the frame member 410 needs to be formed to cover a predetermined area on the second panel 30. That is to say, the frame member 410 does not have to be formed to cover almost the entire area on the second panel 30.

Furthermore, in the embodiments described above, the partition 420 is made of the second hot glue. However, this is only an example and should not be construed as limiting. Alternatively, the partition 420 may include not only the second hot glue but also a core material or any other material as well. That is to say, the partition 420 needs to include at least the second hot glue.

The first glue and the second hot glue do not have to be glass frit but may also be a low-melting metal or a hot melt adhesive, for example. Also, a material for the first glue may be different from a material for the second hot glue.

In the embodiments described above, the internal space 500 is partitioned into a single first space 510 and a single second space 520. Optionally, the internal space 500 may also be partitioned into one or more first spaces 510 and one or more second spaces 520.

In the embodiments described above, a melting furnace is used to heat the frame member 410, the gas adsorbent 60, and the partition 420. However, heating may be conducted by any appropriate heating means. The heating means may be a laser beam or a heat transfer plate connected to a heat source, for example.

In the embodiments described above, the exhaust port 700 is provided through the second panel 30. However, this is only an example and should not be construed as limiting. Alternatively, the exhaust port 700 may be provided through the first glass pane 21 of the first panel 20 or through the frame member 410.

Furthermore, in the embodiments described above, the height, measured from the upper surface of the second panel 30, of the pillars 70 placed on the second panel 30 is equal to the height, measured from the upper surface of the second panel 30, of the hot glue applied on the second panel 30. However, these heights do not have to be equal to each other.

Furthermore, in the embodiments described above, the warpage of the first panel 20 is expressed by a ratio H/L of about 0.2%. However, this warpage ratio H/L is not limited to any specific numerical value.

As can be seen easily from the foregoing description of embodiments and their variations, a glass panel unit (10) manufacturing method according to a first aspect includes a glue arrangement step, a pillar forming step, an assembly forming step, a bonding step, an evacuation step, and a sealing step.

The glue arrangement step includes arranging a hot glue on either a first panel (20) or a second panel (30). The first panel (20) includes a first glass pane (21) and has a predetermined degree of warpage. The second panel (30) includes a second glass pane (31).

The pillar forming step includes placing pillars (70) on either the first panel (20) or the second panel (30).

The assembly forming step includes forming an assembly (100) by arranging the second panel (30) such that the second panel (30) faces the first panel (20). The assembly (100) includes the first panel (20), the second panel (30), the hot glue, and the pillars (70) and has an exhaust port (700) provided through at least one of the first panel (20), the second panel (30), or the hot glue.

The bonding step includes bonding the first panel (20) and the second panel (30) together with the hot glue and thereby forming an internal space (500) surrounded, except the exhaust port (700), with the first panel (20), the second panel (30), and the hot glue that has melted by heating the assembly (100) with the first panel (20) arranged to form an upper part of the assembly (100) and the second panel (30) arranged to form a lower part of the assembly (100).

The evacuation step includes reducing pressure in the internal space (500) by evacuation that involves exhausting a gas from the internal space (500).

The sealing step includes creating a hermetically sealed evacuated space (50) by closing the exhaust port (700) and sealing the internal space (500) while keeping a reduced pressure in the internal space (500).

The glass panel unit (10) manufacturing method according to the first aspect turns the first panel (20) either flat or generally flat due to its own weight. This eliminates the need to use any clip to tightly hold the first panel 20 and second panel 30 together in order to compulsorily eliminate the gap from between the end of the first panel (20) and the hot glue on the second panel (30). This cut down the manufacturing cost and simplifies the manufacturing process.

A glass panel unit (10) manufacturing method according to a second aspect may be implemented in combination with the first aspect. In the glass panel unit (10) manufacturing method according to the second aspect, one surface, defining a raised surface, of the first glass pane (21) is coated with a low-emissivity film. The assembly forming step includes arranging the first panel (20) and the second panel (30) such that the surface, defining the raised surface, of the first glass pane (21) faces the second panel (30).

The glass panel unit (10) manufacturing method according to the second aspect turns the concave-up first panel (20) either flat or generally flat.

A glass panel unit (10) manufacturing method according to a third aspect may be implemented in combination with the first aspect. In the glass panel unit (10) manufacturing method according to the third aspect, the assembly forming step includes arranging the first panel (20) and the second panel (30) such that a surface, defining a recessed surface, of the first glass pane (21) faces the second panel (30).

The glass panel unit (10) manufacturing method according to the third aspect turns the concave-down first panel (20) either flat or generally flat.

### Reference Signs List

- 10: Glass Panel Unit
- 20: First Panel
- 21: First Glass Pane
- 30: Second Panel
- 31: Second Glass Pane
- 50: Evacuated Space
- 70: Pillar
- 100: Assembly
- 500: Internal Space
- 700: Exhaust Port

## Claims

1. A glass panel unit (10) manufacturing method comprising:
a glue arrangement step including arranging a hot glue on either a first panel (20) or a second panel (30), the first panel (20) including a first glass pane (21) and having a predetermined degree of warpage being represented by an H/L ratio equal to or more than 0.2%, where L is the length as measured along the surface of the first panel (20) and H is the magnitude of deviation as measured perpendicularly to the surface of the first panel (20), the second panel (30) including a second glass pane (31);
a pillar forming step including placing pillars (70) on either the first panel (20) or the second panel (30);
an assembly forming step including forming an assembly (100) including the first panel (20) , the second panel (30), the hot glue, and the pillars (70) and having an exhaust port (700) provided through at least one of the first panel (20), the second panel (30), or the hot glue by arranging the second panel (30) such that the second panel (30) faces the first panel (20);
a bonding step including bonding the first panel (20) and the second panel (30) together with the hot glue and thereby forming an internal space (500) surrounded, except the exhaust port (700) , with the first panel (20), the second panel (30), and the hot glue that has melted by heating the assembly (100) with the first panel (20) arranged to form an upper part of the assembly (100) and the second panel (30) arranged to form a lower part of the assembly (100);
the bonding step being divided into a first temperature raising step, a first temperature maintaining step, and a first temperature lowering step according to temperature variations, wherein, in the temperature maintaining step, the first panel (20) softens to a certain degree allowing at least one portion of said first panel (20) to lower itself due to its own weight until said first panel (20) is supported by all or almost all of the hot glue and the pillars (70), so as to significantly reduce or even eliminate the warpage of the first panel (20);
an evacuation step including reducing pressure in the internal space (500) by evacuation that involves exhausting a gas from the internal space (500); and
a sealing step including creating a hermetically sealed evacuated space (50) by closing the exhaust port (700) and sealing the internal space (500) while maintaining a reduced pressure in the internal space (500).

2. The glass panel unit (10) manufacturing method of claim 1, wherein
one surface, defining a raised surface, of the first glass pane (21) is coated with a low-emissivity film, and
the assembly forming step includes arranging the first panel (20) and the second panel (30) such that the surface, defining the raised surface, of the first glass pane (21) faces the second panel (30).

3. The glass panel unit (10) manufacturing method of claim 1, wherein
the assembly forming step includes arranging the first panel (20) and the second panel (30) such that a surface, defining a recessed surface, of the first glass pane (21) faces the second panel (30).

## Patentansprüche

1. Glasscheibeneinheit(10)-Herstellungsverfahren, umfassend:
einen Kleberanordnungsschritt, der ein Anordnen eines Heißklebers auf entweder einer ersten Scheibe (20) oder einer zweiten Scheibe (30) beinhaltet, wobei die erste Scheibe (20) eine erste Glasplatte (21) enthält und einen vorbestimmten Verzugsgrad aufweist, der durch ein H/L-Verhältnis von gleich oder größer als 0,2 % dargestellt wird, wobei L die Länge gemessen entlang der Fläche bzw. Oberfläche der ersten Scheibe (20) ist und H die Abweichungsgröße gemessen senkrecht zu der Oberfläche der ersten Scheibe (20) ist, wobei die zweite Scheibe (30) eine zweite Glasplatte (31) enthält;
einen Stützen- bzw. Pfeilerbildungsschritt, der ein Platzieren von Stützen bzw. Pfeilern (70) auf entweder der ersten Scheibe (20) oder der zweiten Scheibe (30) beinhaltet;
einen Anordnungsbildungsschritt, der ein Bilden einer Anordnung (100) beinhaltet, welche die erste Scheibe (20), die zweite Scheibe (30), den Heißkleber und die Stützen bzw. Pfeiler (70) enthält und eine Auslassöffnung (700) aufweist, die durch zumindest eines der ersten Scheibe (20), der zweiten Scheibe (30) oder den Heißkleber durch Anordnen der zweiten Scheibe (30) derart bereitgestellt wird, dass die zweite Scheibe (30) der ersten Scheibe (20) zugewandt ist;
einen Verbindungsschritt, der ein Verbinden der ersten Scheibe (20) und der zweiten Scheibe (30) zusammen mit dem Heißkleber und dadurch Bilden eines Innenraums (500) beinhaltet, der mit Ausnahme der Auslassöffnung (700) mit der ersten Scheibe (20), der zweiten Scheibe (30), und dem Heißkleber umgeben ist, der durch Erhitzen der Anordnung (100) geschmolzen ist, wobei die erste Scheibe (20) angeordnet ist, einen oberen Teil der Anordnung (100) zu bilden, und die zweite Platte (30) angeordnet ist, einen unteren Teil der Anordnung (100) zu bilden;
wobei der Verbindungsschritt in einen ersten Temperaturerhöhungsschritt, einen ersten Temperaturbeibehaltungsschritt und einen ersten Temperaturerniedrigungsschritt gemäß Temperaturschwankungen unterteilt ist, wobei in dem Temperaturbeibehaltungsschritt die erste Scheibe (20) bis zu einem bestimmten Grad weich wird, was zumindest einem Abschnitt der ersten Scheibe (20) erlaubt, sich aufgrund seines Eigengewichts abzusenken, bis die erste Scheibe (20) durch den gesamten oder fast den gesamten Heißkleber und die Stützen bzw. Pfeiler (70) getragen wird, um das Verziehen der ersten Scheibe (20) deutlich zu reduzieren oder zu eliminieren;
einen Evakuierungsschritt, der ein Reduzieren des Drucks in dem Innenraum (500) durch Evakuieren beinhaltet, was ein Ablassen eines Gases aus dem Innenraum (500) umfasst; und
einen Abdichtschritt, der ein Erzeugen eines hermetisch abgedichteten evakuierten Raums (50) durch Schließen der Auslassöffnung (700) und Abdichten des Innenraums (500) beinhaltet, während ein reduzierter Druck in dem Innenraum (500) beibehalten wird.

2. Herstellungsverfahren für die Glasscheibeneinheit (10) nach Anspruch 1, wobei
eine Fläche bzw. Oberfläche, die eine erhabene Fläche bzw. Oberfläche definiert, der ersten Glasplatte (21) mit einem Film mit niedrigem Emissionsgrad beschichtet ist, und
der Anordnungsbildungsschritt ein Anordnen der ersten Scheibe (20) und der zweiten Scheibe (30) derart umfasst, dass die die erhabene Oberfläche definierende Oberfläche der ersten Glasplatte (21) der zweiten Scheibe (30) zugewandt ist.

3. Herstellungsverfahren für die Glasplatteneinheit (10) nach Anspruch 1, wobei der Anordnungsbildungsschritt ein Anordnen der ersten Scheibe (20) und der zweiten Scheibe (30) derart umfasst, dass eine Fläche bzw. Oberfläche, die eine vertiefte Fläche bzw. Oberfläche definiert, der ersten Glasplatte (21) der zweiten Scheibe (30) zugewandt ist.

## Revendications

1. Procédé de fabrication d'une unité de panneau de verre (10) comprenant :
une étape d'agencement de colle incluant agencer une colle thermofusible sur un premier panneau (20) ou un second panneau (30), le premier panneau (20) incluant une première vitre (21) et ayant un degré de gauchissement prédéterminé qui est représenté par un rapport H/L supérieur ou égal à 0,2 %, où L est la longueur telle que mesurée le long de la surface du premier panneau (20) et H est l'ampleur de l'écart tel que mesuré perpendiculairement à la surface du premier panneau (20), le second panneau (30) incluant une seconde vitre (31) ;
une étape de formation de colonnes incluant placer des colonnes (70) sur le premier panneau (20) ou le second panneau (30) ;
une étape de formation d'ensemble incluant former un ensemble (100) incluant le premier panneau (20), le second panneau (30), la colle thermofusible et les colonnes (70), et ayant un port d'échappement (700) prévu à travers au moins un élément parmi le premier panneau (20), le second panneau (30) ou la colle thermofusible en agençant le second panneau (30) de sorte que le second panneau (30) est tourné vers le premier panneau (20) ;
une étape d'assemblage incluant assembler le premier panneau (20) et le second panneau (30) ensemble avec la colle thermofusible et former de ce fait un espace interne (500) entouré, sauf le port d'échappement (700), du premier panneau (20), du second panneau (30) et de la colle thermofusible qui a fondu en chauffant l'ensemble (100) avec le premier panneau (20) agencé pour former une partie supérieure de l'ensemble (100) et le second panneau (30) agencé pour former une partie inférieure de l'ensemble (100) ;
l'étape d'assemblage étant divisée en une première étape d'élévation de température, une première étape de maintien de température et une première étape d'abaissement de température en fonction de variations de température, dans lequel, dans l'étape de maintien de température, le premier panneau (20) se ramollit à un certain degré, permettant à au moins une portion dudit premier panneau (20) de s'abaisser en raison de son propre poids jusqu'à ce que ledit premier panneau (20) soit supporté par toute ou presque toute la colle thermofusible et les colonnes (70) de manière à nettement réduire, voire même éliminer le gauchissement du premier panneau (20) ;
une étape d'évacuation incluant réduire la pression dans l'espace interne (500) par une évacuation qui implique de faire s'échapper un gaz de l'espace interne (500) ; et
une étape de scellement incluant créer un espace évacué hermétiquement scellé (500) en fermant le port d'échappement (700) et scellant l'espace interne (500) tout en maintenant une pression réduite dans l'espace interne (500).

2. Procédé de fabrication d'une unité de panneau de verre (10) selon la revendication 1, dans lequel
une surface, définissant une surface surélevée, de la première vitre (21) est enrobée d'un film à faible émissivité, et
l'étape de formation d'ensemble inclut agencer le premier panneau (20) et le second panneau (30) de sorte que la surface, définissant la surface surélevée, de la première vitre (21) est tournée vers le second panneau (30).

3. Procédé de fabrication d'une unité de panneau de verre (10) selon la revendication 1, dans lequel
l'étape de formation d'ensemble inclut agencer le premier panneau (20) et le second panneau (30) de sorte qu'une surface, définissant une surface en retrait, de la première vitre (21) est tournée vers le second panneau (30).
